(19) Europäisches Patentamt
European Patent Office
Office européen des brevets

(11) **EP 3 159 653 B1**

(12) **EUROPÄISCHE PATENTSCHRIFT**

(45) Veröffentlichungstag und Bekanntmachung des Hinweises auf die Patenterteilung:
**02.01.2019  Patentblatt 2019/01**

(51) Int Cl.:
***G01B 11/16*** *(2006.01)*       ***G01B 7/16*** *(2006.01)*
***G01B 11/27*** *(2006.01)*

(21) Anmeldenummer: **16194888.0**

(22) Anmeldetag: **20.10.2016**

(54) **MESSSYSTEM FÜR DEHNUNGEN, VERZERRUNGEN ODER VERBIEGUNGEN**

MEASUREMENT SYSTEM FOR STRAIN, DISTORTION OR DEFORMATION

SYSTEME DE MESURE POUR EXTENSION, DISTORTION OU DEFORMATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2015  DE 102015013849**

(43) Veröffentlichungstag der Anmeldung:
**26.04.2017  Patentblatt 2017/17**

(73) Patentinhaber: **Helmut-Schmidt-Universität/ Universität der Bundeswehr Hamburg 22043 Hamburg (DE)**

(72) Erfinder:
• **SCHOLL, Gerd 22393 Hamburg (DE)**
• **HEYNICKE, Ralf 23909 Ratzeburg (DE)**
• **SOLZBACHER, Thomas 27404 Zeven (DE)**
• **KRUSH, Dmytro 22043 Hamburg (DE)**

(74) Vertreter: **Maiwald Patent- und Rechtsanwaltsgesellschaft mbH Elisenhof Elisenstraße 3 80335 München (DE)**

(56) Entgegenhaltungen:
DE-A1- 2 303 787      DE-A1- 10 210 541
US-A- 4 480 480       US-A- 4 763 941
US-A1- 2009 178 488   US-B1- 6 817 246

EP 3 159 653 B1

**Beschreibung**

Die Erfindung betrifft ein Messsystem für Verzerrungen, Verbiegungen und Torsionen eines Objekts, das temporär mit dem Objekt verbindbar ist.

Stand der Technik

Verzerrungen auf der Oberfläche von Objekten werden schon seit langem mit Dehnungsmessstreifen vermessen. Ein Dehnungsmessstreifen (DMS) wandelt typisch eine Dehnung $\varepsilon$ auf der Oberfläche eines Objektes in eine Änderung seines elektrischen Widerstands um. DMS sind beispielsweise aus der DE 30 43 890 A1 bekannt.

Die hohe Messgenauigkeit eines DMS steht und fällt damit, dass der DMS in genau spezifizierter Weise mit dem untersuchten Objekt verklebt wird. Diese Verklebung kann in der Regel nur mit einem speziellen Klebstoff und am besten durch geschultes Personal vorgenommen werden. Bei der Verwendung von DMS geht man in der Regel davon aus, dass der DMS dauerhaft auf dem Objekt verbleibt. Dies hat den Nachteil, dass DMS und Klebstoff nur sehr aufwändig und in der Regel nicht rückstandsfrei wieder vom Objekt entfernt werden können. Häufig bleiben auf dem Objekt Klebstoffreste zurück, oder das Objekt wird beim gewaltsamen Entfernen des DMS beschädigt. Dadurch kann die weitere Nutzbarkeit des Objekts eingeschränkt sein. Beispielsweise wird eine speziell behandelte Oberfläche zerkratzt oder angeätzt.

US 6,817,246 B1 offenbart ein System zur Messung von Verzerrungen, Verbiegungen oder Torsionen eines Objekts mit zwei oder mehr auf dem Objekt montierbaren Sensoren.

US 4,480,480 A offenbart ein System zur Überwachung der Integrität einer Struktur, bei der geometrische Veränderungen der Struktur durch ein Zusammenspiel mehrerer auf dem Objekt montierter Sensoren erkannt werden können.

DE 102 10 541 A1 offenbart ein Verfahren und eine robuste Anordnung zur direkten Messung von Spannungen an elastisch verformbaren Flächen. Die Spannungen werden durch die Antwort der Flächen auf eine Schwingungsanregung detektiert.

4,763,941 A offenbart einen Vakuumgreifer zum Greifen elektronischer Bauelemente, um damit beispielsweise Platinen automatisiert zu bestücken.

DE 2 303 787 A1 offenbart eine Anordnung mit einem Dehnungsmessstreifen, die wiederverwendbar und zugleich von Anwendern ohne Spezialkenntisse auf einem Objekt montierbar ist.

US 2009/178 488 A1 offenbart einen mechanischen Verstärker, mit dem minimale Bewegungen eines Objekts in eine größere Bewegung umgesetzt werden können, damit diese größere Bewegung wiederum mit Sensoren gemessen werden kann.

Aufgabe und Lösung

Aufgabe der vorliegenden Erfindung ist, ein Messsystem zur Verfügung zu stellen, mit dessen Hilfe eine Verzerrung, Verbiegung oder Torsion eines Objekts, insbesondere eine Verzerrung auf der Oberfläche des Objekts, bestimmt werden kann, ohne dass die weitere Nutzbarkeit des Objekts dadurch zwangsläufig eingeschränkt wird.

Diese Aufgabe wird erfindungsgemäß gelöst durch ein Messsystem gemäß Hauptanspruch sowie durch ein Verfahren gemäß Nebenanspruch. Weitere vorteilhafte Ausgestaltungen ergeben sich aus den darauf rückbezogenen Unteransprüchen.

Gegenstand der Erfindung

Im Rahmen der Erfindung wurde ein Messsystem zur Bestimmung einer Verzerrung, Verbiegung oder Torsion eines Objekts entwickelt.

Diese Verzerrung kann dabei eine Dehnung sein, wobei der Begriff der Dehnung $\varepsilon$ ausdrücklich auch die Stauchung, die eine negative Dehnung $\varepsilon$ ist, umfasst. Die Verzerrung kann auch eine Scherung sein. Eine Verzerrung ist allgemein eine Verformung auf mikroskopischer Ebene, die für beliebig kleine Teilvolumina des Objekts erklärt ist. Demgegenüber sind eine Verbiegung und eine Torsion Verformungen auf makroskopischer Ebene, die nur für ein ausgedehntes Objekt erklärt sind, sich also nur auf der Längenskala dieses ausgedehnten Objekts manifestieren.

Das Messsystem umfasst mindestens zwei Sonden, typisch zwei Sonden. Weiterhin sind Befestigungsmittel vorgesehen, über die die Sonde(n) in zerstörungsfrei lösbarer Weise mit dem Objekt verbindbar ist/sind.

Eine Sonde ist in diesem Zusammenhang allgemein ein Element, das zum Zwecke der Messung einer Verzerrung, Verbiegung oder Torsion eines Objekts temporär mit dem Objekt verbindbar ist und bei dieser Messung eine Funktion erfüllt. Eine Sonde kann ein aktives Element sein, beispielsweise ein Sender oder ein Empfänger für eine elektromagnetische Welle. Eine Sonde kann aber auch ein rein passives Element ohne eigene Energieversorgung sein und beispielsweise einen Reflektor für elektromagnetische Wellen integriert haben.

Unter "zerstörungsfrei lösbar" wird in diesem Zusammenhang insbesondere verstanden, dass nach dem Lösen der Sonde vom Objekt sowohl die Sonde als auch das Objekt weiterhin gemäß ihrer Zweckbestimmung verwendbar sind. Die Sonde ist also im Gegensatz zu den bisher verwendeten DMS kein Einwegartikel, sondern wiederverwendbar. Die Sonde ist rückstandsfrei vom Objekt lösbar, so dass im Gegensatz zur bisherigen Befestigung von DMS weder Klebstoffreste dauerhaft auf dem Objekt verbleiben noch das Objekt beschädigt werden muss, um solche Klebstoffreste rückstandsfrei zu entfernen.

Es sind weiterhin Messmittel zur Bestimmung der Distanz x, und/oder der Distanzänderung dx, und/oder einer relativen Winkelposition $\alpha$, und/oder einer Winkeländerung d$\alpha$ der relativen Winkelposition $\alpha$, zwischen beiden Sonden vorgesehen. Weiterhin ist eine Auswerteeinheit zur Ermittlung der Verzerrung aus der Distanz x, und/oder der Distanzänderung dx, und/oder aus dem Winkel $\alpha$, und/oder aus der Winkeländerung d$\alpha$, vorgesehen.

Es wurde erkannt, dass die Zurückführung der Messung einer Dehnung $\varepsilon$, Verzerrung oder Verbiegung des Objekts auf die Messung einer Distanz x und/oder Distanzänderung dx zwischen den beiden Sonden technisch deutlich verbessert. Das Funktionsprinzip der DMS nach dem bisherigen Stand der Technik beruht darauf, dass die Dehnung $\varepsilon$ des Objekts als solche originalgetreu auf den DMS übertragen und von diesem in eine Änderung seines elektrischen Widerstands R umgesetzt wird. Dies bringt es mit sich, dass der DMS in seiner ganzen Länge absolut korrekt gemäß Spezifikation mit einer Verklebung am Objekt befestigt sein muss. da ansonsten die Messunsicherheiten zu groß werden bzw. die Messung verfälscht wird. Zum anderen ist es sehr aufwändig, DMS und Klebstoff zu entfernen, ohne das Objekt zu beschädigen. DMS lassen sich also typischerweise nicht temporär an einem Objekt befestigen, ohne in der einen oder in der anderen Form unauslöschliche Spuren zu hinterlassen.

Des Weiteren ist es bei Messungen mit einem DMS nicht mit dem Aufbringen und ggfs. Entfernen des DMS getan. Die Änderung des elektrischen Widerstands R, die die Dehnung $\varepsilon$ am DMS hervorruft, ist sehr klein. Um sie mit der geforderten Genauigkeit zu messen, ist neben dem DMS selbst ein Zusatzaufwand an Laborgeräten (Messbrücke etc.) erforderlich.

Um gemäß der Erfindung mit Hilfe der Sonde(n) zu messen, um welche Distanzänderung dx bzw. Winkeländerung da sich ein oder mehrere Punkte auf der Oberfläche des Objekts infolge einer Verzerrung, Verbiegung oder Torsion relativ zueinander und/oder relativ zu einem Fixpunkt verschieben, müssen nur die Positionen dieser Punkte originalgetreu auf die Sonde(n) übertragen werden. Es wurde erkannt, dass diese Randbedingung ein weitaus breiteres Spektrum an Befestigungsmitteln für die Befestigung der Sonde(n) am Objekt zulässt als die Randbedingung, dass eine Verzerrung der Oberfläche als solche originalgetreu übertragen werden muss. Dadurch sind für die Messung auch Befestigungsmittel nutzbar, die zerstörungsfrei wieder lösbar sind.

Weiterhin bietet die Rückführung der Messung auf eine Distanz- bzw. Winkelmessung die Möglichkeit, über die Entfernung zwischen den Sonden den Signalhub zu erhöhen. So ist z.B. die Dehnung $\varepsilon$ definiert als Längenänderung pro ursprüngliche Länge. Je größer die anfängliche Distanz x zwischen beiden Sonden ist, desto größer ist also auch die Änderung dieser Distanz dx bei der gleichen Dehnung $\varepsilon$ des Objekts.

Die Distanz- bzw. Winkelmessung kann unmittelbar von der Sonde bzw. den Sonden mit einer nachgeschalteten Elektronik selbst vorgenommen werden und erfordert dann keine speziellen zusätzlichen Laborgeräte. Weiterhin wird das Messergebnis direkt in Größen geliefert, in denen die Deformation des Objekts ausgedrückt ist, und nicht als sehr kleine Änderung eines elektrischen Widerstands R, der noch in eine passende Größe übersetzt werden muss.

Schließlich geht die Messung mit den bekannten DMS bedingt durch die Verklebung untrennbar damit einher, dass die Oberfläche des Objekts versteift wird. Bei elastischeren oder relativ dünnen Materialien, wie z.B. Gummiplatten, können sich die mechanischen Eigenschaften des Materials dadurch deutlich verändern, oder es ist überhaupt keine sinnvolle Messung mit dem DMS möglich. Die Reaktion eines so veränderten Bauteils auf eine mechanische Beanspruchung ist nicht notwendigerweise dieselbe wie die des unveränderten Bauteils, was die Aussagekraft der Messung mindert. Gemäß der Erfindung fällt die Versteifung der Objektoberfläche zwischen den Sonden weg.

Der Begriff "zwei Sonden" schließt ausdrücklich nicht aus, dass beide Sonden auf einem gemeinsamen Träger angeordnet sind, der wiederum zerstörungsfrei lösbar mit dem Objekt verbindbar ist. Entscheidend ist, dass die Sonden zwei Elemente sind, zwischen denen eine Distanz x und/oder eine Winkelposition $\alpha$ definiert sind, so dass die Messung der Verzerrung, Verbiegung oder Torsion im Sinne der Erfindung auf eine Distanz- und/oder Winkelmessung zurückführbar ist. Wenn nur eine Sonde vorhanden ist, kommt es analog darauf an, dass zwischen dieser einen Sonde und einem Fixpunkt eine Distanz x und/oder eine Winkelposition $\alpha$ definiert sind.

Die Befestigungsmittel umfassen mindestens einen evakuierbaren Raum, der vorzugsweise durch das Zusammenführen der Sonde mit dem Objekt abdichtbar ist, und/oder ein durch das Zusammenführen der Sonde mit dem Objekt gebildetes Vakuum. Hierzu können beispielsweise die Befestigungsmittel weiterhin mindestens einen Kanal umfassen, durch den der Raum nach dem Zusammenführen der Sonde mit dem Objekt evakuierbar ist. Dieser Kanal kann beispielsweise innerhalb der Sonde verlaufen.

Die Befestigung der Sonden mit einem Vakuum kann je nach Höhe über dem Meer eine Andruckkraft von bis ungefähr 1000 hPa = 10 N/cm$^2$ erzeugen, was ungefähr der Kraft entspricht, die eine Masse von 1 kg auf eine Fläche

von 1 cm$^2$ ausübt. Zum einen sind die Sonden rückstandsfrei entfernbar, indem der evakuierbare Raum wieder belüftet wird. Zum anderen sind die Sonden auf diese Weise auch besonders einfach nicht nur manuell, sondern auch von Maschinen oder Industrierobotern auf das Objekt aufbringbar und vom Objekt wieder ablösbar. Das Messsystem ist also ohne größeren Aufwand in der industriellen Fertigung automatisiert einsetzbar, im Gegensatz zu den bisherigen DMS.

In einer besonders vorteilhaften Ausgestaltung der Erfindung weist mindestens eine dem Objekt zugewandte Auflagefläche der Befestigungsmittel eine umlaufende Nut mit einer Dichtung auf, die durch Evakuieren des evakuierbaren Raums komprimiert wird. Im Interesse einer optimalen Genauigkeit und Reproduzierbarkeit der Messungen ist es wünschenswert, dass die Auflagefläche statisch definiert am Objekt anliegt, beispielsweise an mindestens drei Punkten, an denen sie einen definierten Winkel relativ zur Oberfläche hat. Dies steht jedoch im Zielkonflikt dazu, dass der Spalt zwischen der Auflagefläche und dem Objekt zugleich als Abdichtung für das Vakuum im evakuierbaren Raum benötigt wird. Die Dichtung gleicht eine eventuelle Überbestimmtheit in der Anlage der Auflagefläche zum Objekt aus und eliminiert somit den Zielkonflikt.

Vorteilhaft sind Mittel zur Überwachung des Vakuums vorgesehen. Damit kann vermieden werden, dass sich die Sonden auf Grund eines plötzlichen Lecks oder einer langsamen schleichenden Leckage plötzlich vom Objekt lösen und beim Fall beschädigt werden bzw. Schaden anrichten. Zu diesem Zweck können die Sonden auch zusätzlich lösbar mit dem Objekt verklebt sein oder über ein anderes Back-up-System, beispielsweise über eine Sicherheitsleine, mit dem Objekt verbunden sein. Die Überwachung kann in einer einfachsten Ausführungsform den Verlust an Vakuum oder auch die Zeit bis zum Ablösen der Sonde anzeigen. In einer fortgeschrittenen Ausführungsform sind Mittel zum Ausgleich zumindest langsamer Leckagen vorgesehen, beispielsweise durch Aktivierung einer Pumpe oder einer anderen Unterdruckquelle.

Alternativ oder in Kombination zu Vakuum sind auch alle anderen Befestigungsmittel zugelassen. Die Befestigungsmittel können beispielsweise Schraub- oder Klemmverbindungen umfassen. Insbesondere kann das Objekt mit einem entsprechenden Gewinde oder einer entsprechenden Aufnahme vorgerüstet sein. Auch Klebstoffe, die ein rückstandsfreies Entfernen der Sonde vom Objekt gestatten, können verwendet werden. Dass nunmehr ein breiter Kanon von Befestigungsmitteln verwendbar ist, ist eine vorteilhafte Wirkung der Grundidee der Erfindung, die Messung der Verzerrung, Verbiegung oder Torsion auf eine Distanz- bzw. Winkelmessung zurückzuführen.

Sofern eine Sonde Energie benötigt, verfügt sie vorteilhaft über eine autarke Energieversorgung, beispielsweise über Akkus oder Batterien. Die Sonde kann aber auch beispielsweise Prozessenergie aus der Umgebung "ernten".

Vorteilhaft sind die Messmittel zur Messung einer Distanz x zwischen 0,1 cm und 15 cm, bevorzugt zwischen 0,5 cm und 5 cm, ausgebildet. Je größer die Distanz x ist, desto größer ist auch die Distanzänderung dx bei einer gegebenen Dehnung $\varepsilon$ des Objekts. Auf der anderen Seite ist die Messunsicherheit für die Distanz x bei den meisten Messverfahren in relativen Einheiten spezifiziert, d.h., sie steigt proportional zur Distanz x an. Schließlich ist das Messsystem auch umso kompakter, je geringer die Distanz x ist. Der genannte Bereich stellt einen optimalen Kompromiss zwischen diesen Anforderungen bereit.

Unter der willkürlichen Annahme (die allerdings die Allgemeingültigkeit der Aussage nicht einschränkt) einer Torsionsspannung von z.B. $\tau_t$ = 100 N/mm$^2$ = 100 MPa, und einem Schubmodul G von 50 GPa ergibt sich bei einer Welle mit Kreisquerschnitt und Radius r = 5 cm mit Hilfe von

$$d\alpha = \tau_t / G \cdot l / r$$

über eine Distanz von l = 2 cm ein Verdrehwinkel von d$\alpha$ = 0,8.10$^{-3}$ rad $\approx$ 0,05°, was einer horizontalen Verschiebung von ungefähr dy = 16 $\mu$m entspricht. Vorteilhaft sind die Messmittel daher zur Messung einer Winkeländerung d$\alpha$ zwischen 0,001° und 0,1° ausgebildet.

Gemäß einer ersten Alternative umfassen die Messmittel mindestens einen Sender und mindestens einen Empfänger für eine elektromagnetische Welle oder für Ultraschall.

Dabei können ausdrücklich auch auf ein und derselben Sonde mehrere Sender und/oder mehrere Empfänger angeordnet sein. Hiermit kann ausgehend von einer Sonde die Distanz x bzw. die Winkelposition $\alpha$ zu mehreren anderen Sonden und/oder Fixpunkten gleichzeitig gemessen werden. Damit kann beispielsweise eine Dehnung $\varepsilon$ oder Scherung bzw. Winkelverzerrung separat in mehreren Koordinatenrichtungen gemessen werden.

An Hand von Aluminium und Baustahl, welche zwei gängige Materialien für zu vermessende Objekte sind, lässt sich z.B. für Dehnungen $\varepsilon$ der Bereich der zu messenden Distanzen x und Distanzänderungen dx abschätzen. Aluminium hat ein Elastizitätsmodul E von ca. 70 GPa und eine Streckgrenze zwischen 100 N/mm$^2$ und 255 N/mm$^2$. Baustahl hat ein Elastizitätsmodul E von ca. 210 GPa und eine Streckgrenze zwischen 185 N/mm$^2$ und 355 N/mm$^2$. Über das Hookesche Gesetz für isotrope Werkstoffe

$$\sigma = \varepsilon \cdot E$$

ist im eindimensionalen Fall die als Kraft pro Fläche definierte mechanische Spannung σ mit dem Elastizitätsmodul E und der Dehnung ε=Δl/l, also der Längenänderung Δl pro Ursprungslänge l, verknüpft. Im elastischen Bereich einer Materialdehnung ist E konstant. Mit den genannten Materialeigenschaften ergibt sich für Aluminium eine maximal mögliche Dehnung zwischen 1,4 und 3,6 Promille. Für Baustahl ergibt sich eine maximal mögliche Dehnung ε zwischen 0,9 und 1,7 Promille. Um bei einer Distanz x von 1 cm zwischen den Sonden Dehnungen ε im Bereich zwischen 0,9 und 3,6 Promille zu erfassen, ist eine Distanzänderung dx zwischen 9 μm und 36 μm zu bestimmen. Hierbei ist eine Auflösung im Bereich von 1 μm und darunter, z.B. im nm-Bereich, wünschenswert. Diese Anforderung lässt sich insbesondere erfüllen mit:

- optischen und interferometrischen Messungen, beispielsweise mit Halbleiterlasern und hier beispielsweise bei einer Wellenlänge λ=405 nm, wie sie für das Auslesen von Blu-Ray-Speichermedien genutzt wird;
- konfokal-chromatischen Sensorsystemen;
- Ultraschallmessungen. Bei einer Frequenz von 10 MHz und einer Schallgeschwindigkeit von c=300 m/s beträgt die Wellenlänge λ=30 μm. Typisch können Messungen zwischen dem zehnten und dem hundertsten Teil einer Wellenlänge mit moderatem Aufwand realisiert werden.

Auch eine Hochfrequenzmessung, etwa im Frequenzbereich 60 GHz (λ=5 mm), ist denkbar, wenn auch möglicherweise mit geringerer Auflösung.

Der Sender und der Empfänger sind auf der einen Sonde angeordnet, und mindestens ein Reflektor für die elektromagnetische Welle bzw. für den Ultraschall ist auf der anderen Sonde angeordnet, bzw. die andere Sonde ist als ein solcher Reflektor ausgebildet. Dann benötigt nur eine der Sonden eine Energieversorgung. Weiterhin wird die zur Verfügung stehende Messstrecke verdoppelt, indem der Hin- und der Rückweg ausgenutzt werden. Es ist jedoch auch möglich, dass alle Sonden ausschließlich als Reflektoren bzw. als Positionsmarken ausgebildet sind, deren Distanzen x bzw. Winkelpositionen α zueinander von einer objektexternen Stelle aus gemessen werden.

Es ist ein zusätzlicher Reflektor auf der Sonde angeordnet, die den Sender und den Empfänger trägt. Dann verfügt diese Sonde über eine bekannte Referenz-Messstrecke, die zur Kalibrierung der Distanzmessung auf absolute Werte verwendet werden kann.

In einer weiteren besonders vorteilhaften Ausgestaltung der Erfindung ist der Empfänger positionssensitiv. Damit kann das Messsystem ergänzend darauf sensitiv gemacht werden, von welcher Art die Verzerrung, Verbiegung oder Torsion des Objekts ist bzw. in welcher Richtung diese erfolgt. Speziell eignet sich ein positionssensitiver Detektor für eine Messung der Winkelposition α bzw. einer Winkeländerung da.

In einer weiteren besonders vorteilhaften Ausgestaltung der Erfindung ist der positionssensitive Empfänger dazu ausgebildet, eine Relativbewegung der Sonden und zueinander in einer Ebene zu erfassen, wobei mindestens eine Kombination aus einem weiteren Sender und einem weiteren Empfänger vorgesehen ist, um eine Relativbewegung senkrecht zu dieser Ebene zu erfassen. Beide Sender-Empfänger-Paare ergänzen sich dann vorteilhaft, um gleichzeitig mit einer Dehnung auch eine Verkippung oder Verwindung des Objekts zu erfassen. Insbesondere können zwei weitere Sender-Empfänger-Paare vorgesehen sein, um auch zwischen einer Verkippung und einer Verwindung eindeutig unterscheiden sowie die Richtung der Verkippung bzw. Verwindung bestimmen zu können.

Ein optischer Sensor als Empfänger für eine elektromagnetische Welle kann insbesondere als optoelektronischer oder photoelektronischer Sensor ausgebildet sein.

Die Messmittel können in einer weiteren vorteilhaften Ausgestaltung der Erfindung auch einen oder mehrere kapazitive Sensoren, und/oder einen oder mehrere Wirbelstromsensoren, und/oder einen oder mehrere induktive Sensoren, und/oder einen oder mehrere LVDTs aufweisen, der bzw. die auf eine Positionsänderung der Sonden zueinander sensitiv ist bzw. sind.

In einer weiteren vorteilhaften Ausgestaltung der Erfindung sind die beiden Sonden über mindestens einen Wandler, der eine Relativbewegung und/oder eine Kraftwirkung zwischen den beiden Sonden in ein elektrisches Signal umzusetzen vermag, mechanisch miteinander verbunden. Auch diese Art der Messung ist insbesondere für stark verschmutzte Umgebungen geeignet, in denen etwa eine optische Messung erschwert ist. Einzige Voraussetzung ist, dass die durch die mechanische Verbindung zwischen den beiden Sonden übertragenen Kräfte die Haftkraft, mit der die Sonden am Objekt festgehalten werden, nicht übersteigen.

In einer weiteren besonders vorteilhaften Ausgestaltung der Erfindung sind die Sonden zur Funkübertragung von Messdaten untereinander ausgebildet, und/oder mindestens eine der Sonden ist zur Funkübertragung von Messdaten an die Auswerteeinheit ausgebildet. Zusätzlich kann diese Sonde auch dazu ausgebildet sein, ein Kalibrierungsnormal von der Auswerteeinheit zu empfangen.

Insbesondere kann eine Vielzahl von Sonden auf einer Oberfläche des Objekts angeordnet sein, und diese Sonden können mit einer zentralen Auswerteeinheit kommunizieren, so dass beispielsweise ein Fertigungsprozess in Echtzeit überwacht werden kann. Hierzu weisen die einzelnen Sonden vorteilhaft global eindeutige Adressen (GUIDs), wie beispielsweise MAC-Adressen, auf.

Die beiden Sonden sind durch mindestens ein Zwischenstück, das eine Relativbewegung zwischen den Sonden auf Grund der Verzerrung, Verbiegung oder Torsion auf der Oberfläche des Objekts nicht behindert, unverlierbar miteinander verbunden. Die Handhabung des so zu einer Einheit zusammengefassten Sondenpaars wird dadurch deutlich vereinfacht, insbesondere, wenn das Sondenpaar maschinell oder durch einen Industrieroboter mit dem Objekt zusammengeführt werden soll oder wenn für das manuelle Zusammenführen nur eine Hand frei ist.

Dabei können die Messmittel zumindest teilweise innerhalb eines von den beiden Sonden und dem Zwischenstück umgrenzten Innenraums angeordnet sein. Beispielsweise können elektronische Komponenten der Messmittel innerhalb dieses Innenraums angeordnet und so vor Umwelteinflüssen und mechanischen Beschädigungen geschützt sein.

Ein solches Messsystem lässt sich beispielsweise als kompaktes Mikrosystem von der Größe einer Streichholzschachtel (53 mm x 37 mm x 12 mm) realisieren mit einem Gewicht von 100 g oder weniger, so dass die Haltekraft von Vakuumfüßen ausreicht, um dieses Mikrosystem sicher auf der Oberfläche des Objekts zu halten. Mit zwei Vakuumfüßen der Größe 1 cm x 1 cm kann bei idealem Vakuum theoretisch eine Haltekraft realisiert werden, die der Gewichtskraft einer Masse von ca. 2 kg entspricht. Das Mikrosystem kann beispielsweise eine autarke Energieversorgung und/oder einen autarken Datenlogger enthalten. Das Mikrosystem kann beispielsweise nach dem Einschalten ohne weiteres Zutun beständig Messwerte aufnehmen und abspeichern oder über eine Funkstrecke an eine Leitstelle oder einen Auswerterechner senden. Es kann dann beispielsweise von einem Industrieroboter nacheinander an verschiedenen Orten auf dem Objekt befestigt und nach Durchführung der Messungen wieder von ihm abgelöst werden. Dabei muss der Industrieroboter ansonsten nicht in der Lage sein, das Mikrosystem im Detail zu bedienen. Das Mikrosystem kann sich selbstüberwacht ansaugen und selbständig die Messungen durchführen und die Messwerte auch eigenständig einer Qualitätskontrolle unterziehen. Die bisher eingesetzten DMS sind nur dann besonders preiswert, wenn die zusätzlich erforderlichen Laborgeräte sowie die fachgerechte Montage und eventuelle Demontage außer Betracht bleiben.

Gemäß einer zweiten Alternative umfassen die Messmittel mindestens einen zusätzlichen Justieradapter, der mit beiden Sonden zugleich in Eingriff bringbar ist und in diesem Zustand einen Referenzwert für die Distanz x bzw. die Winkelposition $\alpha$ zwischen beiden Sonden festlegt. Beispielsweise können die beiden Sonden eine Anordnung aus Erhebungen und/oder Vertiefungen aufweisen, die genau dann mit einer hierzu korrespondieren Anordnung aus Vertiefungen und/oder Erhebungen am Justieradapter im Eingriff stehen, wenn die Distanz x und/oder die Winkelposition $\alpha$ zwischen beiden Sonden dem Referenzwert entspricht.

Insbesondere können beide Sonden auf das Objekt aufgebracht werden, während sie in Eingriff mit dem Justieradapter stehen, und in Eingriff mit dem Justieradapter verbleiben, während die Befestigungsmittel angelegt werden. Dadurch wird vorteilhaft vermieden, dass durch eine Kraftausübung beim Anlegen der Befestigungsmittel die Distanz x, bzw. die Winkelposition $\alpha$, zwischen beiden Sonden wieder vom Referenzwert wegbewegt wird. Der Justieradapter selbst kann weiterhin dazu ausgebildet sein, beim Anlegen der Befestigungsmittel mitzuwirken. Er kann beispielsweise einen Anschluss aufweisen, der durch Zusammenführen des Justieradapters mit den Sonden mit einem korrespondieren Anschluss an mindestens einer Sonde verbindbar ist und in diesem Zustand einen evakuierbaren Raum dieser Sonde mit einer externen Unterdruckquelle verbindet. Dies vereinfacht insbesondere das maschinelle Aufbringen des Sondenpaars auf das Objekt.

Der Justieradapter kann weiterhin auch einen oder mehrere Anschlüsse für Energie und/oder Datenübertragung aufweisen, die ebenfalls durch Zusammenführen des Justieradapters mit den Sonden mit mindestens einem korrespondierenden Anschluss an mindestens einer Sonde verbindbar sind. Beispielsweise kann das Sondenpaar einen Kondensator als Energiespeicher aufweisen, der unmittelbar vor einer Messung durch die Energiezufuhr vom Justieradapter aufgeladen wird. Dann benötigt das Sondenpaar keine Batterie, die regelmäßig nachgeladen und/oder ausgetauscht werden muss. Das Sondenpaar kann weiterhin beispielsweise einen Datenspeicher aufweisen, der beim Ablösen des Sondenpaars vom Objekt durch den Anschluss für Kommunikation am Justieradapter ausgelesen wird. Auf diese Weise können die gewonnenen Messdaten für die Distanz x bzw. Distanzänderung dx, und/oder den Winkel $\alpha$ bzw. die Winkeländerung $\alpha$, auch dann maschinell ausgelesen werden, wenn eine Funkübertragung nicht möglich ist, beispielsweise in einer Umgebung mit starken elektromagnetischen Störungen. Über den Anschluss für Kommunikation kann weiterhin das Sondenpaar, bzw. dessen Messelektronik, konfiguriert und parametrisiert werden.

In einer weiteren besonders vorteilhaften Ausgestaltung der Erfindung sind die Sonden durch eine Mehrzahl von Federelementen untereinander und mit einem gemeinsamen Montagerahmen verbunden sind, wobei der Montagerahmen zum Objekt hin geöffnet ist. Der Montagerahmen bewirkt im Gegensatz zum Justieradapter keine automatische Kalibrierung des Abstands der Sonden zueinander. Dafür muss der Montagerahmen niemals von den Sonden getrennt werden, so dass das Sondenpaar immer am Montagerahmen gefasst und auf diese Weise versetzt werden kann. Dies vereinfacht insbesondere die Handhabung des Sondenpaars durch einen Industrieroboter.

Vorteilhaft sind die Federelemente Druck-Zug-Federn oder andere Elemente mit einer kraftfreien Ruhelage.

Dann üben die Federelemente in dieser Ruhelage keine Kräfte auf die Sonden aus, die zu einer Verfälschung des Messergebnisses oder zu einem Ablösen der Sonden vom Objekt führen könnten.

In einer weiteren besonders vorteilhaften Ausgestaltung der Erfindung umfasst das Messsystem ein erstes Sondenpaar und ein zweites Sondenpaar. Die Auswerteeinheit ist dazu ausgebildet, durch den Vergleich der mit beiden Sondenpaaren registrierten Distanzen x, und/oder Distanzänderungen dx, und/oder Winkelpositionen $\alpha$, und/oder Winkeländerungen d$\alpha$, Deformationen des Objekts in einer Ebene von Deformationen des Objekts aus dieser Ebene heraus zu unterscheiden. Derartige Messungen liefern eine detailliertere Information als die bislang verwendeten DMS. Sie werden durch die zerstörungsfrei lösbare Verbindung der Sonden zum Objekt und durch die hiermit gewonnene Flexibilität bei der Wahl der Anbringorte für die Sonden praktikabel.

Die Sonden können zusätzlich noch weitere Sensoren, beispielsweise für Vibrationen, Beschleunigungen oder Drehraten, aufweisen. Weiterhin ist es auch möglich, nur diese Größen zu messen und gar keine Deformation. Die Erfindung bezieht sich allgemein auf eine Sonde mit einem Sensor oder einer Markierung, die zur Messung einer physikalischen Messgröße des Objekts oder zur Identifikation des Objekts nutzbar ist. Es sind Befestigungsmittel vorgesehen, mit denen die Sonde in zerstörungsfrei lösbarer Weise mit einem Objekt verbindbar ist. Die Befestigungsmittel umfassen einen evakuierbaren Raum, der vorzugsweise durch das Zusammenführen der Sonde mit dem Objekt abdichtbar ist, und/oder ein durch das Zusammenführen der Sonde mit dem Objekt gebildetes Vakuum. Es kann eine Auswerteeinheit vorgesehen sein, die mit Hilfe der Sonde die physikalische Messgröße ermittelt bzw. das Objekt identifiziert.

Nach dem zuvor Gesagten bezieht sich die hier gegebene Lehre allgemein auf ein Verfahren zur Bestimmung einer Verzerrung, Verbiegung oder Torsion eines Objekts. Dieses Verfahren zeichnet sich durch folgende Schritte aus:

- mindestens zwei Sonden werden so mit dem Objekt verbunden, dass sie zerstörungsfrei wieder von dem Objekt lösbar sind, indem ein zu Befestigungsmitteln gehörender Raum evakuiert wird, und/oder indem durch das Zusammenführen der Sonde mit dem Objekt ein Vakuum gebildet wird;
- zwecks Kalibrierung der Distanzmessung zwischen den Sonden wird

  ◦ eine Referenz-Messstrecke, die von einem Sender auf einer Sonde über einen zusätzlichen Reflektor auf der gleichen Sonde zu einem Empfänger auf der gleichen Sonde führt, mit einer elektromagnetischen Welle oder mit Ultraschall gemessen;
  und/oder es wird
  ◦ ein zusätzlicher Justieradapter mit beiden Sonden zugleich in Eingriff gebracht, so dass er in diesem Zustand einen Referenzwert für die Distanz x bzw. die Winkelposition $\alpha$ zwischen beiden Sonden festlegt;

- die Distanz x, und/oder die Distanzänderung dx, und/oder die Winkelposition $\alpha$, und/oder die Winkeländerung d$\alpha$, zwischen zwei mit dem Objekt verbundenen Sonden, und/oder zwischen einer Sonde (3a, 3b) und einem Fixpunkt (X), wird gemessen;
- aus der Distanz x, und/oder aus der Distanzänderung dx, und/oder aus der Winkelposition $\alpha$, und/oder aus der Winkeländerung d$\alpha$, wird die Verzerrung, Verbiegung oder Torsion ausgewertet;
- die Sonde(n) wird/werden wieder vom Objekt gelöst.

Das erfindungsgemäße Messsystem und das beschriebene Verfahren sind speziell für den Laborbetrieb geeignet, wo häufig ein Bedarf nach einer temporären Dehnungsmessung besteht. Auch ist eine extrem hohe Messauflösung in den Anwendungsfällen unter Umständen nicht notwendig, in denen nur ein grober Orientierungswert für Oberflächenverzerrungen zur Verfügung gestellt werden muss. Ein weiteres wichtiges Anwendungsfeld ist die industrielle Fertigung, wo nunmehr genau dasjenige Stück überwacht werden kann, das tatsächlich ausgeliefert wird. Untersuchungen mit DMS waren vielfach auf Probstücke beschränkt, die nach der Untersuchung nicht mehr weiter nutzbar waren. Beispielsweise kann bei der Montage von Bauteilen mit Hilfe der Erfindung überwacht werden, ob zu irgendeinem Zeitpunkt während der Fertigung die maximal zulässige mechanische Beanspruchung eines Bauteils überschritten wurde.

Das Messsystem und das Verfahren sind weiterhin nicht auf bestimmte Materialien für das Objekt eingeschränkt.

Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:

Figur 1:     Ausführungsbeispiel eines erfindungsgemäßen Messsystems 1.
Figur 2:     Weiteres Ausführungsbeispiel eines erfindungsgemäßen Messsystems 1 mit Justieradapter 57.

Figur 3: Weiteres Ausführungsbeispiel eines erfindungsgemäßen Messsystems 1 mit mechanischem Wandler 56.

Figur 4: Weiteres Ausführungsbeispiel eines erfindungsgemäßen Messsystems 1 mit vier Sonden 3a, 3b, 3c, 3d.

Figur 5: Weiteres Ausführungsbeispiel eines erfindungsgemäßen Messsystems 1 mit durch Vakuum angesaugter Folie 92.

Figur 6: Versuchsaufbau für den Test von Vakuumfüßen als Befestigungsmittel 4.

Figur 7: Messdaten des Versuchsaufbaus gemäß Figur 6.

Figur 8: Weiteres Ausführungsbeispiel eines Vakuumfußes 4.

Figur 9: Ausführungsbeispiel für ein leicht handhabbares Messsystem 1 mit Montagerahmen 9.

Figur 10: Kombination dreier Sender-Empfänger-Paare zur Unterscheidung verschiedener Formänderungen des Objekts 2 voneinander.

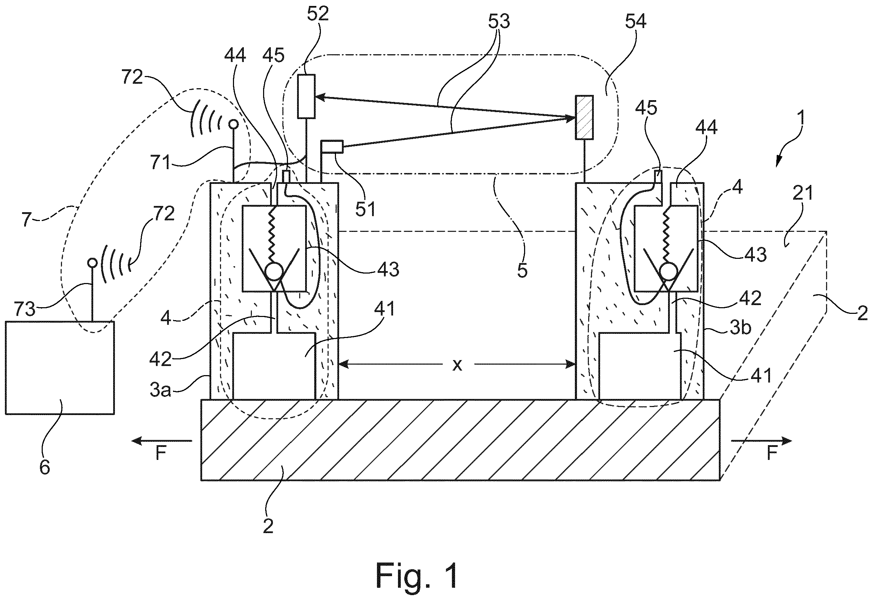

Figur 1 zeigt ein Ausführungsbeispiel eines erfindungsgemäßen Messsystems 1. Zu untersuchen ist die Dehnung ε eines Objekts 2 infolge einer entlang der Richtung der Pfeile wirkenden Kraft F. Das Messsystem umfasst zwei Sonden 3a und 3b mit jeweils identischen Befestigungsmitteln 4. Diese Befestigungsmittel umfassen einen Raum 41, der durch das Zusammenführen der Sonden 3a, 3b mit dem Objekt 2 abdichtbar ist. Durch einen Kanal 42 ist dieser Raum evakuierbar, indem an einem Vakuumanschluss 44 eine Unterdruckquelle vorgelegt wird. Das Vakuum im Raum 41 wird über ein entsperrbares Rückschlagventil 43 gehalten. Um die Sonden 3a und 3b zerstörungsfrei wieder vom Objekt zu lösen, wird das jeweilige Rückschlagventil 43 über den Entsperranschluss 45 entsperrt. Durch den Vakuumanschluss 44 strömt dann Luft zurück in den Raum 41, und die Sonde 3a, 3b lässt sich kraftfrei vom Objekt 3 lösen.

Die Messmittel 5, die in diesem Ausführungsbeispiel als Längenmessmittel ausgebildet sind, umfassen einen Laser 51 als Sender und eine positionssensitive Fotodiode 52 als Empfänger für Licht 53. Der Laser 51 und die Fotodiode 52 sind beide auf der ersten Sonde 3a angeordnet. Auf der zweiten Sonde 3b ist ein Spiegel 54 angeordnet, der das vom Laser 51 einfallende Licht 53 zur Fotodiode 52 reflektiert. Mit dieser Anordnung wird die Distanz x zwischen den beiden Sonden 3a und 3b gemessen. Die Messelektronik ist aus Gründen der Übersichtlichkeit in Figur 1 nicht eingezeichnet.

Die Messwerte für die Distanz x werden über eine Funkstrecke 7 zur Auswerteeinheit übermittelt. Sie werden über eine Sendeantenne 71 als Funksignal 72 abgestrahlt und von einer zur Auswerteeinheit 6 gehörenden Empfangsantenne 73 aufgefangen. Die Auswerteeinheit 6 ermittelt in diesem Ausführungsbeispiel die gesuchte Dehnung ε.

Die Ebene, auf der die beiden Sonden 3a und 3b angeordnet sind, ist perspektivisch skizziert und mit 21 bezeichnet. Da die Fotodiode 52 positionssensitiv ist, kann das Messsystem 1 zwischen einer Dehnung ε in der Ebene 21 und einer Verbiegung aus dieser Ebene 21 heraus unterscheiden.

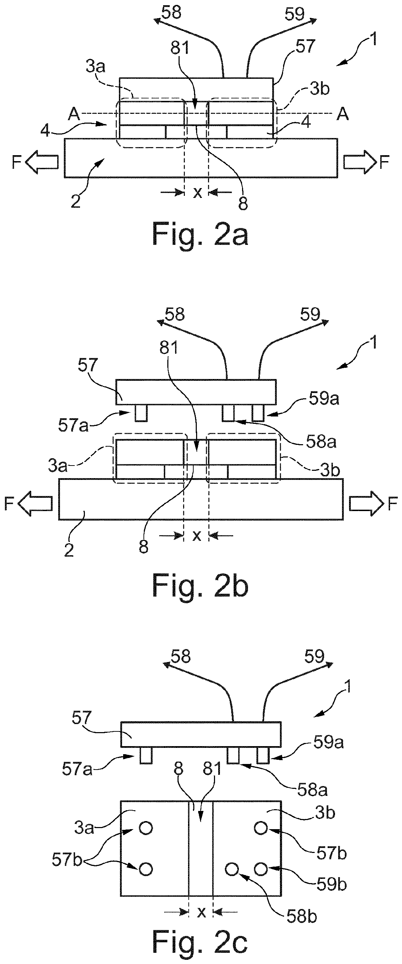

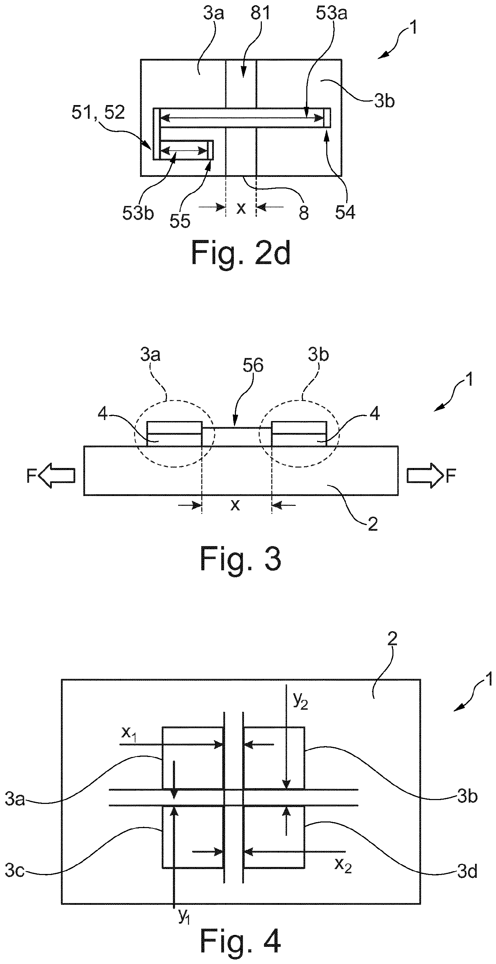

Figur 2 zeigt, wie ein Justieradapter 57 eingesetzt werden kann, um die Messung der Distanz x zwischen den Sonden 3a und 3b auf einen bekannten Wert zu initialisieren. Die Sonden 3a und 3b sind hier durch ein hochflexibles Zwischenstück 8 unverlierbar miteinander verbunden. Die Messelektronik, Vakuumerzeugung und Energieversorgungskomponenten sind in dem Raum 81 angeordnet, der vom Zwischenstück 8 sowie den Sonden 3a und 3b umgrenzt wird. Die Auswerteeinheit 6 ist in Figur 2 der Übersichtlichkeit halber nicht eingezeichnet. Das Zwischenstück 8 kann beispielsweise ein miniaturisierter Faltenbalg sein.

Im in Figur 2a gezeigten Zustand befinden sich beide Sonden 3a und 3b gleichzeitig im Eingriff mit dem Zwischenstück 8. Der Justieradapter 57 ist mit einer Unterdruckquelle 58 verbunden, mit der in den Vakuumfüßen, die beiden Sonden 3a und 3b als Befestigungsmittel 4 dienen, ein Vakuum erzeugt werden kann. Der Justieradapter 57 ist weiterhin mit Leitungen 59 für Energie und Kommunikation verbunden, über die Messdaten aus den Sonden 3a und 3b ausgelesen und die Messelektronik der aus diesen Sonden 3a und 3b gebildeten Messvorrichtung 1 parametrisiert werden kann.

Die Figuren 2b und 2c verdeutlichen, wie der Justieradapter 57 mit den Sonden 3a und 3b gekoppelt wird. Figur 2b zeigt, wie in Figur 2a, eine Seitenansicht, mit dem Unterschied, dass der Justieradapter 57 in Figur 2b von den Sonden 3a und 3b abgezogen ist. In dieser Perspektive wird ein Justierstift 57a, der in eine korrespondierende Justierbohrung 57b an der Sonde 3a einzugreifen vermag, sichtbar. Weiterhin werden ein Stecker 58a für die Vakuumzuführung und ein Stecker 59a für Energie und Kommunikation sichtbar. Die Stecker 58a und 59a vermögen in korrespondierende Buchsen 58b und 59b an der Sonde 3b einzugreifen. Die Buchsen 58b und 59b, sowie alle vorhandenen Justierbohrungen 57b, werden in Figur 2c sichtbar, in der die durch das Zwischenstück 8 verbundene Anordnung der Sonden 3a und 3b in Aufsicht gezeigt ist.

Figur 2d zeigt in Aufsicht Details der Messmittel 5 in einer Schnittzeichnung entlang der in Figur 2a eingezeichneten Schnittlinie A-A. Auf der Sonde 3a ist ein kombinierter Sender/Empfänger 51, 52 für Licht 53a, 53b angeordnet. Licht wird vom Sender 51 entlang eines Strahlengangs 53a zu einem Reflektor 54 auf der Sonde 3b gestrahlt und von dem Reflektor 54 in Richtung des Empfängers 52 zurückgeworfen. Zugleich wird das Licht entlang eines Referenzstrahlengangs 53b zu einem zusätzlichen Reflektor 55 gestrahlt, der auf der gleichen Sonde 3a angeordnet ist wie der Sender 51 und der Empfänger 52. Der Reflektor 55 strahlt das Licht ebenfalls zurück in den Empfänger 52. Der Referenzstrahlengang 53b, dessen Länge immer gleich ist, stellt ein Kalibriernormal für die interferometrische Messung der Distanz x zwischen den Sonden 3a und 3b bereit.

Figur 3 zeigt ein weiteres Ausführungsbeispiel des erfindungsgemäßen Messsystems 1. Die Auswerteeinheit 6 ist in Figur 3 der Übersichtlichkeit halber nicht eingezeichnet. Im Unterschied zu den in den Figuren 1 und 2 gezeigten Ausführungsbeispielen ist zur Messung der Distanz x zwischen den Sonden 3a und 3b ein mechanischer Wandler 56 vorgesehen, der eine Relativbewegung zwischen den Sonden 3a und 3b in ein elektrisches Signal umwandelt. Verwendbar ist hier beispielsweise ein Widerstandsdraht oder aber eine Glasfaser, eine Folie oder ein Blech mit darauf angebrachten oder darin integrierten Sensoren.

Figur 4 zeigt ein weiteres Ausführungsbeispiel des erfindungsgemäßen Messsystems 1. Dieses Ausführungsbeispiel zeichnet sich dadurch aus, dass vier Sonden 3a, 3b, 3c und 3d zum Einsatz kommen. Es sind nun jeweils separate Längenmessmittel 5 für die Messung der Distanz $x_1$ zwischen den Sonden 3a und 3b, der Distanz $x_2$ zwischen den Sonden 3c und 3d, der Distanz $y_1$ zwischen den Sonden 3a und 3c sowie der Distanz $y_2$ zwischen den Sonden 3b und 3d vorgesehen, die in Figur 4 der Übersichtlichkeit halber nicht eingezeichnet sind. Durch die simultane Messung aller vier Distanzen $x_1$, $x_2$, $y_1$ und $y_2$ kann die Art der Deformation des Objekts 2 qualitativ und quantitativ wesentlich genauer identifiziert werden.

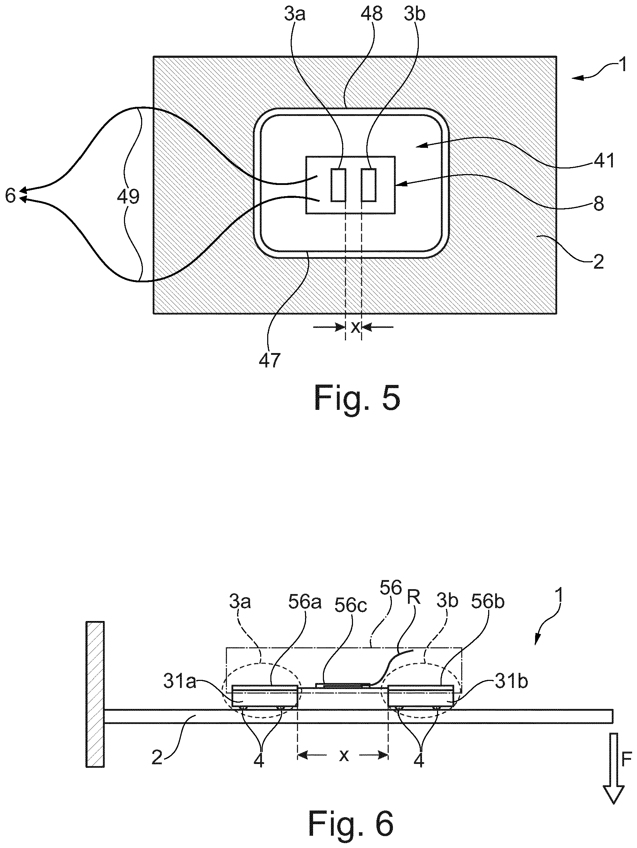

Figur 5 zeigt eine weitere mögliche Realisierung von Befestigungsmitteln 4 für die Sonden 3a und 3b am Objekt 2. Die Sonden 3a und 3b befinden sich zwischen dem Objekt 2 und einem Zwischenstück 8, über das sie unverlierbar miteinander verbunden sind. Die Sensoren 3a und 3b sollten somit in der in Figur 5 gewählten Perspektive durch das Zwischenstück 8 verdeckt sein, sind aber aus Gründen der Deutlichkeit dennoch eingezeichnet. Über dem Zwischenstück 8 ist eine elastische, luftundurchlässige Folie 47 angeordnet, die zusammen mit dem elastischen Dichtrahmen 48 einen evakuierbaren Raum 41 umgrenzt. Aus diesem Raum 41 sind Anschlüsse 49 herausgeführt, die die Messdaten der Sonden 3a und 3b zur Auswerteeinheit 6 führen.

Figur 6 zeigt einen Testaufbau, mit dem die Eignung von Vakuumfüßen als Befestigungsmittel 4 geprüft wurde. Die Sonden 3a und 3b umfassen jeweils einen Grundkörper 31a bzw. 31b, der über Vakuumfüße 4 mit dem Objekt 2 verbunden ist. Die Grundkörper 31a und 31b der Sonden 3a bzw. 3b sind über einen DMS als mechanischer Wandler 56 miteinander verbunden. Dieser DMS 56 ist über Klebestellen 56a und 56b an den Grundkörpern 31a und 31b der Sonden 3a bzw. 3b befestigt. Der DMS 56 ändert infolge einer Dehnung ε seinen elektrischen Widerstand R, der am Abgriff 56c der Messung zugänglich ist. Das Objekt 2 ist ein Biegebalken, der an seinem linken Ende fest eingespannt ist und an seinem rechten Ende mit einer Kraft F beaufschlagbar ist. Der DMS 56 hat im ungedehnten Zustand einen Widerstandswert R von 120 Ω und bildet zusammen mit einem Festwiderstand von 120 Ω, der in Figur 6 nicht eingezeichnet ist, eine Halbbrücke. Im Versuch der Erfinder wurde der Biegebalken mit einer zunehmenden Kraft F beaufschlagt und über den Widerstandswert R jeweils die Dehnung ε des DMSs 56 gemessen.

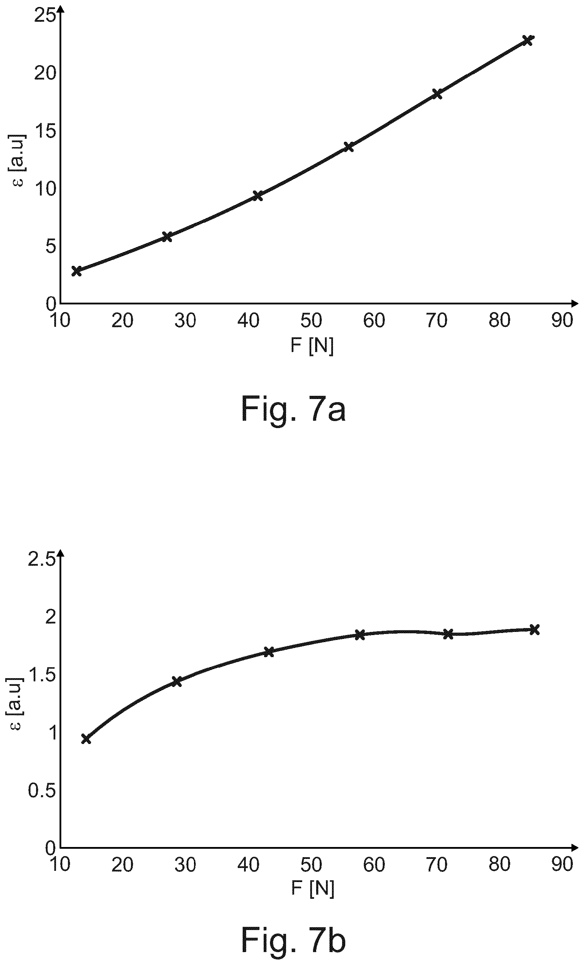

Figur 7a zeigt Messergebnisse der mit dem DMS 56 gemessenen Dehnung ε als Funktion der auf den Biegebalken 2 ausgeübten Kraft F. Die Messwerte wurden unmittelbar nach dem Herstellen eines Vakuums in den Vakuumfüßen 4 aufgenommen. Die gemessene Dehnung ε ist im Wesentlichen linear mit der Kraft F. Wenn die Kraft F weggenommen wurde, ging auch die gemessene Dehnung wieder auf Null zurück. Dies zeigt, dass die Vakuumfüße 4 ihre Position während des Versuchs behalten haben. Sie sind also in der Lage, sowohl das Gewicht der Sonden 3a und 3b als auch die quer angreifenden Zugkräfte des DMS 56 zu halten.

Figur 7b zeigt Messergebnisse, die nach 72 Stunden ohne Erneuern des Vakuums in den Vakuumfüßen 4 gewonnen wurden. Das Vakuum hat gehalten, und analog zum in Figur 7a gezeigten ersten Teil des Versuchs ging die Dehnung ε auch nach mehreren Wiederholungen des Versuchs beim Wegnehmen der Kraft F auch wieder auf Null zurück. Die Vakuumfüße blieben also in Position. Ohne Erneuern des Vakuums wird die Messgenauigkeit nach einer so langen Zeit allerdings erheblich beeinflusst.

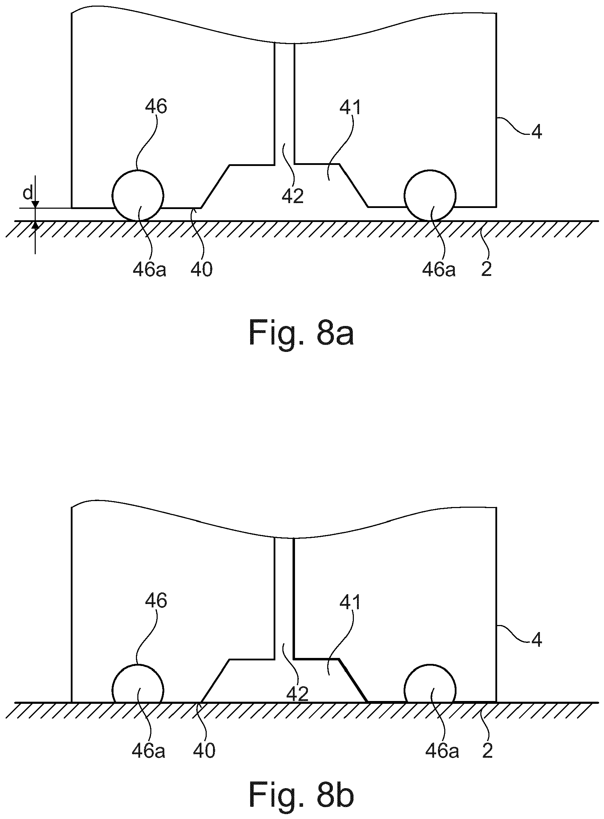

Figur 8 zeigt ein weiteres vorteilhaftes Ausführungsbeispiel für einen Vakuumfuß 4. Der evakuierbare Raum 41 ist in die dem Objekt 2 zugewandte Auflagefläche 40 eingelassen. Der Spalt zwischen der Auflagefläche 40 und dem Objekt 2 bildet zugleich die Abdichtung des evakuierbaren Raums 41.

Die Auflagefläche 40 enthält eine umlaufende Nut 46 mit einer Dichtung 46a. In dem in Figur 8a gezeigten Zustand ist der Raum 41 noch nicht evakuiert. Der Vakuumfuß 4 steht daher auf der Dichtung 46a, wodurch sich ein Spalt mit der Breite d zwischen der Auflagefläche 40 und dem Objekt 2 bildet.

Ist der Raum 41 durch den Kanal 42 evakuiert worden, stellt sich der in Figur 8b gezeigte Zustand ein. Der Vakuumfuß 4 wird durch das Vakuum fest gegen die Oberfläche des Objekts 2 gepresst. Dadurch wird die Dichtung 46a komprimiert und verhindert so den Luftzutritt durch verbliebene Leckagespalte zwischen der Auflagefläche 40 und dem Objekt 2 in Richtung auf den Raum 41.

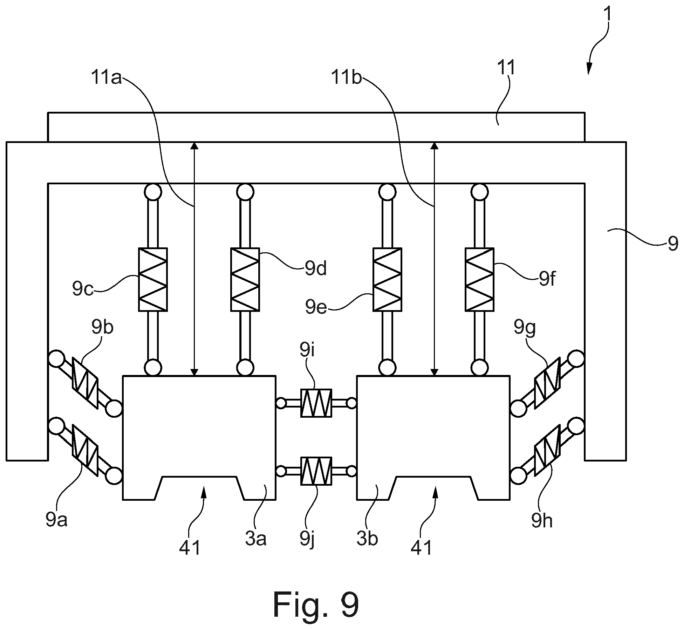

Figur 9 zeigt ein von einem Roboter besonders einfach handhabbares Messsystem 1 aus zwei Sonden 3a und 3b, die über Leitungen 11a und 11b mit einer gemeinsamen Elektronikeinheit 11 verbunden sind. Die Messmittel 5 der Sonden 3a und 3b sind in Figur 9 der Übersichtlichkeit halber nicht eingezeichnet.

Die Sonden 3a und 3b sind untereinander und mit einem gemeinsamen Montagerahmen 9 über Druck-Zug-Federn 9a-9j verbunden. Wenn sowohl die Sonden 3a und 3b als auch der Montagerahmen 9 auf einem Objekt 2 aufliegen, stellt sich eine kräftefreie Ruhelage aller Federn 9a-9j ein. Ausgehend von dieser Ruhelage sind die Federn 9a-9j jeweils in beiden Richtungen gleichmäßig belastbar.

In diesem Zustand können die evakuierbaren Räume 41 der Sonden 3a und 3b evakuiert werden. Anschließend können sich die Sonden 3a und 3b automatisch auf ihren Anfangsabstand zueinander, der in dieser Ausgestaltung nicht durch einen Justieradapter 57 festgelegt ist, kalibrieren. Bewegen sich die Sonden 3a und 3b dann zueinander, führt dies nicht zur Auslenkung der Federn 9a-9j. Somit wird die Messung von Relativbewegungen der beiden Sonden 3a und 3b zueinander nicht gestört.

Nach der Messung können die Räume 41 wieder belüftet werden. Beide Sonden 3a und 3b lassen sich dann gemeinsam mit dem leicht handhabbaren Montagerahmen 9 vom Objekt 2 entfernen.

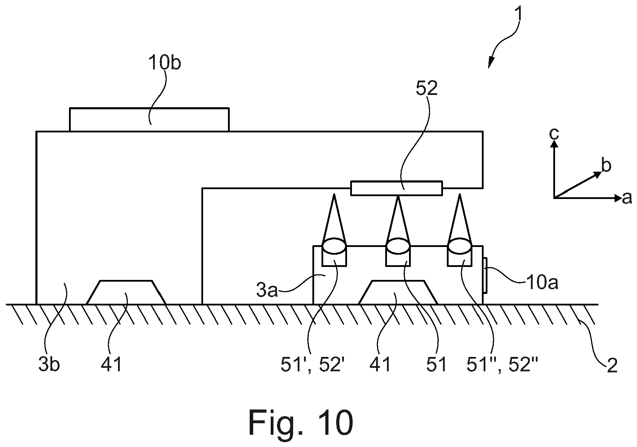

Figur 10 zeigt ein weiteres Ausführungsbeispiel für ein Messsystem 1. Hier wirkt ein erster Laser 51 an der Sonde 3a mit einem positionssensitiven Detektor 52 an der Sonde 3b zusammen, um Verschiebungen der Sonden 3a und 3b zueinander entlang der ebenen Oberfläche des Objekts 2 zu erkennen. Zusätzlich sind noch zwei weitere Laserdistanzsensoren an der Sonde 3a vorgesehen. Diese Laserdistanzsensoren sind jeweils als Kombination aus Laser 51' und Detektor 52', bzw. aus Laser 51" und Detektor 52", ausgebildet. Die Strahlen aus den Lasern 51' und 51" werden jeweils von der Sonde 3b zum Detektor 52' bzw. 52" reflektiert.

Auf diese Weise können auch Verbiegungen und Verwindungen des Objekts 2 erkannt und voneinander sowie von bloßen Dehnungen und Stauchungen des Objekts 2 unterschieden werden.

Wird das Objekt 2 beispielsweise entlang der a-Achse und/oder entlang der b-Achse gestaucht, so äußert sich dies in einer bloßen Verschiebung der beiden Sonden 3a und 3b zueinander. Der positionssensitive Detektor 52 registriert also eine Wanderung des fokussierten Laserpunkts vom Laser 51, während sich das Signal an den Detektoren 52' und 52" nicht ändert.

Durchbiegt sich das Objekt 2, weil beispielsweise sein rechtes Ende heruntergedrückt wird, wandert die Position des Laserpunkts vom Laser 51 auf dem positionssensitiven Detektor 52 in positiver a-Richtung. Zugleich registrieren beide zu den Laserdistanzsensoren gehörigen Detektoren 52' und 52" einen vergrößerten Abstand.

Wird das Objekt 2 in sich tordiert, beispielsweise um die a-Achse, so werden ebenfalls beide Detektoren 52' und 52" einen vergrößerten Abstand registrieren. Im Unterschied zu der besagten Durchbiegung wird jedoch der Laserpunkt vom Laser 51 auf dem positionssensitiven Detektor 52 anders wandern, nämlich entlang der b-Richtung.

Somit genügen drei Sender 51, 51', 51" und drei Empfänger 52, 52', 52", um alle möglichen Formänderungen des Objekts 2 voneinander eindeutig zu unterscheiden.

Die Sonde 3a ist mit einer ersten Elektronikeinheit 10a ausgestattet. Die Sonde 3b ist mit einer zweiten Elektronikeinheit 10b ausgestattet. Beide Elektronikeinheiten 10a und 10b kommunizieren miteinander, um die anfänglichen Abstände zueinander zu kalibrieren sowie um die vom Detektor 52 an der Sonde 3b registrierte Position des fokussierten Laserpunkts vom Laser 51 mit den von den Detektoren 52' und 52" registrierten Abständen zusammenzuführen.

**Bezugszeichenliste**

| | |
|---|---|
| 1 | Messsystem |
| 2 | Objekt |
| 3a, 3b, 3c, 3d | Sonden |
| 4 | Befestigungsmittel |
| 5 | Messmittel |
| 6 | Auswerteeinheit |
| 7 | Funkübertragung |
| 8 | Zwischenstück |
| 9 | Montagerahmen |
| 9a-9j | Federelemente |
| 10a, 10b | Elektronikeinheit für eine einzelne Sonde 3a, 3b |
| 11 | gemeinsame Elektronikeinheit für Sonden 3a, 3b |
| 11a, 11b | Leitungen von Elektronikeinheit 11 zu Sonden 3a, 3b |
| 21 | Ebene des Objekts 2 |
| 31a, 31b | Grundkörper der Sonden 3a, 3b |
| 40 | Auflagefläche der Befestigungsmittel 4 |
| 41 | evakuierbarer Raum |
| 42 | Kanal zum Evakuieren des Raums 41 |
| 43 | entsperrbares Rückschlagventil |
| 44 | Vakuumanschluss |
| 45 | Entsperranschluss |

| 46 | umlaufende Nut in Auflagefläche 40 |
| 46a | Dichtung in umlaufender Nut 46 |
| 47 | luftundurchlässige Folie |
| 48 | elastische Dichtung |
| 49 | Anschlüsse, durch Dichtung 48 geführt |
| 51, 51', 51" | Sender |
| 52, 52', 52" | Empfänger |
| 53 | Licht |
| 53a | Strahlengang für Distanzmessung |
| 53b | Referenzstrahlengang |
| 54 | Reflektor |
| 55 | zusätzlicher Reflektor |
| 56 | mechanischer Wandler |
| 56a, 56b | Klebestellen |
| 56c | Abgriff des Dehnungsmessstreifens 56 |
| 57 | Justieradapter |
| 57a | Justierstift |
| 57b | Justierbohrung |
| 58 | Unterdruckquelle |
| 58a | Stecker für Vakuumzuführung |
| 58b | Buchse für Vakuumzuführung |
| 59 | Leitungen für Energie und Kommunikation |
| 59a | Stecker für Energie und Kommunikation |
| 59b | Buchse für Energie und Kommunikation |
| 71 | Sendeantenne |
| 72 | Funksignal |
| 73 | Empfangsantenne |
| 81 | von Zwischenstück 8, Sonden 3a, 3b umgrenzter Raum |
| a, b, c | Koordinatenrichtungen |
| A-A | Schnittlinie |
| dx | Distanzänderung |
| $\varepsilon$ | Dehnung |
| E | Elastizitätsmodul |
| F | Kraft |
| G | Schubmodul |
| r | Radius |
| R | elektrischer Widerstand |
| $\sigma$ | mechanische Spannung |
| $\tau_t$ | Torsionsspannung |
| X | Fixpunkt |
| $x, x_1, x_2, y_1, y_2$ | Distanzen |

**Patentansprüche**

1. Messsystem (1) zur Bestimmung einer Verzerrung, Verbiegung oder Torsion eines Objekts (2), **umfassend** mindestens zwei Sonden (3a, 3b), weiterhin umfassend Befestigungsmittel (4), über die die Sonden (3a, 3b) in zerstörungsfrei lösbarer Weise mit dem Objekt (2) verbindbar sind, weiterhin umfassend Messmittel (5) zur Bestimmung der Distanz x, und/oder der Distanzänderung dx, und/oder einer relativen Winkelposition a, und/oder einer Winkeländerung da der relativen Winkelposition a, zwischen beiden Sonden (3a) und (3b) sowie eine Auswerteeinheit (6) zur Ermittlung der Verzerrung, Verbiegung oder Torsion aus der Distanz x, und/oder aus der Distanzänderung dx, und/oder aus der relativen Winkelposition a, und/oder aus der Winkeländerung d$\alpha$, wobei die Befestigungsmittel (4) mindestens einen evakuierbaren Raum (41), und/oder ein durch das Zusammenführen einer Sonde (3a, 3b) mit dem Objekt (2) gebildetes Vakuum, umfassen, wobei die beiden Sonden (3a, 3b) durch mindestens ein Zwischenstück (8), das eine Relativbewegung zwischen den Sonden (3a, 3b) auf Grund der Verzerrung, Verbiegung oder Torsion des Objekts (2) nicht behindert, unverlierbar miteinander verbunden sind und wobei

• die Messmittel (5) mindestens einen Sender (51) und mindestens einen Empfänger (52) für eine elektromagnetische Welle (53) oder für Ultraschall umfassen, wobei der Sender (51) und der Empfänger (52) auf der einen Sonde (3a) angeordnet sind, wobei mindestens ein Reflektor (54) für die elektromagnetische Welle (53) bzw. für den Ultraschall auf der anderen Sonde (3b) angeordnet ist und wobei ein zusätzlicher Reflektor (55) auf der Sonde (3a) angeordnet ist, die den Sender (51) und den Empfänger (52) trägt,

und/oder

• die Messmittel (5) mindestens einen zusätzlichen Justieradapter (57) umfassen, der mit beiden Sonden (3a, 3b) zugleich in Eingriff bringbar ist und in diesem Zustand einen Referenzwert für die Distanz x bzw. die Winkelposition α zwischen beiden Sonden (3a, 3b) festlegt.

2. Messsystem (1) nach Anspruch 1, **dadurch gekennzeichnet, dass** der evakuierbare Raum (41) durch das Zusammenführen einer Sonde (3a, 3b) mit dem Objekt (2) abdichtbar ist.

3. Messsystem (1) nach einem der Ansprüche 1 bis 2 **dadurch gekennzeichnet, dass** die Befestigungsmittel (4) weiterhin mindestens einen Kanal (42) umfassen, durch den der Raum (41) nach dem Zusammenführen einer Sonde (3a, 3b) mit dem Objekt (2) evakuierbar ist.

4. Messsystem (1) nach einem der Ansprüche 1 bis 3, **dadurch gekennzeichnet, dass** mindestens eine dem Objekt (2) zugewandte Auflagefläche (40) der Befestigungsmittel (4) eine umlaufende Nut (46) mit einer Dichtung (46a) aufweist, die durch Evakuieren des evakuierbaren Raums (41) komprimiert wird.

5. Messsystem (1) nach einem der Ansprüche 1 bis 4, **dadurch gekennzeichnet, dass** die Messmittel (5) zur Messung einer Distanz x zwischen 0,1 cm und 15 cm, bevorzugt zwischen 0,5 cm und 5 cm, ausgebildet sind.

6. Messsystem (1) nach einem der Ansprüche 1 bis 5, **dadurch gekennzeichnet, dass** die Messmittel (5) zur Messung einer Winkeländerung da zwischen 0,001° und 0,1° ausgebildet sind.

7. Messsystem (1) nach einem der Ansprüche 1 bis 6, **dadurch gekennzeichnet, dass** der Empfänger (52) positionssensitiv ist.

8. Messsystem (1) nach Anspruch 7, **dadurch gekennzeichnet, dass** der positionssensitive Empfänger (52) dazu ausgebildet ist, eine Relativbewegung der Sonden (3a, 3b) zueinander in einer Ebene zu erfassen, wobei mindestens eine Kombination aus einem weiteren Sender (51'; 51") und einem weiteren Empfänger (52'; 52") vorgesehen ist, um eine Relativbewegung senkrecht zu dieser Ebene zu erfassen.

9. Messsystem (1) nach einem der Ansprüche 1 bis 8, **dadurch gekennzeichnet, dass** die Messmittel (5) mindestens einen an der einen Sonde (3a) angeordneten kapazitiven Sensor und/oder Wirbelstromsensor, induktiven Sensor und/oder LVDT aufweisen, der auf eine Positionsänderung der beiden Sonden (3a) und (3b) zueinander sensitiv ist.

10. Messsystem (1) nach einem der Ansprüche 1 bis 9, **dadurch gekennzeichnet, dass** die beiden Sonden (3a, 3b) über mindestens einen Wandler (56), der eine Relativbewegung und/oder eine Kraftwirkung zwischen den beiden Sonden (3a, 3b) in ein elektrisches Signal umzusetzen vermag, mechanisch miteinander verbunden sind.

11. Messsystem (1) nach einem der Ansprüche 1 bis 10, **dadurch gekennzeichnet, dass** die Sonden (3a, 3b) zur Funkübertragung (7) von Messdaten untereinander ausgebildet sind und/oder mindestens eine der Sonden zur Funkübertragung (7) von Messdaten an die Auswerteeinheit (6) ausgebildet ist.

12. Messsystem (1) nach einem der Ansprüche 1 bis 11, **dadurch gekennzeichnet, dass** die Messmittel (5) zumindest teilweise innerhalb eines von den beiden Sonden (3a, 3b) und dem Zwischenstück (8) umgrenzten Innenraums (81) angeordnet sind.

13. Messsystem (1) nach einem der Ansprüche 1 bis 12, **dadurch gekennzeichnet, dass** die Sonden (3a, 3b) durch eine Mehrzahl von Federelementen (9a-9j) untereinander und mit einem gemeinsamen Montagerahmen (9) verbunden sind, wobei der Montagerahmen (9) zum Objekt (2) hin geöffnet ist.

14. Messsystem (1) nach einem der Ansprüche 1 bis 13, **dadurch gekennzeichnet, dass** es ein erstes Sondenpaar (3a, 3b) und ein zweites Sondenpaar (3c, 3d) umfasst und dass die Auswerteeinheit (6) dazu ausgebildet ist, durch den Vergleich der mit beiden Sondenpaaren (3a, 3b; 3c, 3d) registrierten Distanzen x, und/oder Distanzänderungen dx, und/oder Winkelpositionen a, und/oder Winkeländerungen da, Deformationen des Objekts (2) in einer Ebene (21) von Deformationen des Objekts (2) aus dieser Ebene (21) heraus zu unterscheiden.

**Claims**

1. A measuring system (1) for determining a strain, bending or torsion of an object (2), **comprising** at least two probes (3a, 3b), further comprising fixing means (4) via which the probes (3a, 3b) are connectable to the object (2) in a manner that is releasable non-destructively, further comprising measuring means (5) for determining the distance x, and/or the distance change dx, and/or a relative angular position $\alpha$, and/or an angular change d$\alpha$ of the angular position $\alpha$, between both probes (3a) and (3b), as well as an evaluation unit (6) for determining the strain, bending or torsion from the distance x, and/or from the distance change dx, and/or from the angular position $\alpha$, and/or from the angular change d$\alpha$, wherein the fixing means (4) comprise at least a space (41) capable of being evacuated, and/or a vacuum formed by bringing a probe (3a, 3b) and the object (2) together, wherein both probes (3a, 3b) are captively connected together by an intermediate member (8) that does not hinder a relative movement between the probes (3a, 3b) due to the strain, bending or torsion of the object (2), and wherein

   • the measuring means (5) comprise at least one transmitter (51) and at least one receiver (52) for an electromagnetic wave (53) or for ultrasound, wherein the transmitter (51) and the receiver (52) are disposed on the one probe (3a), wherein at least one reflector (54) for the electromagnetic wave (53), respectively for the ultrasound, is disposed on the other probe (3b), and wherein an additional reflector (55) is disposed on the probe (3a) that carries the transmitter (51) and the receiver (52),
   and/or
   • the measuring means (5) comprise at least one additional alignment adapter (57) that can be brought into engagement with both probes (3a, 3b) simultaneously and sets, in this state, a reference value for the distance x, respectively for the angular position $\alpha$, between both probes (3a, 3b).

2. The measuring system according to claim 1, **characterized in that** the space (41) capable of being evacuated is sealable by bringing one probe (3a, 3b) and the object (2) together.

3. The measuring system (1) according to any one of claims 1 to 2, **characterized in that** the fixing means (4) further comprise at least one channel (42) through which the space (41) is capable of being evacuated after bringing one probe (3a, 3b) and the object (2) together.

4. The measuring system (1) according to any one of claims 1 to 3, **characterized in that** at least one bearing face (40) of the fixing means (4) facing the object (2) comprises a circumferential groove (46) with a seal (46a) that is compressed when the space (41) is evacuated.

5. The measuring system (1) according to any one of claims 1 to 4, **characterized in that** the measuring means (5) are configured for measuring a distance x between 0,1 cm and 15 cm, preferably between 0,5 cm and 5 cm.

6. The measuring system (1) according to any one of claims 1 to 5, **characterized in that** the measuring means (5) are configured for measuring an angular change d$\alpha$ between 0,001° and 0,1°.

7. The measuring system (1) according to any one of claims 1 to 6, **characterized in that** the receiver (52) is position sensitive.

8. The measuring system (1) according to claim 7, **characterized in that** the position sensitive receiver (52) is configured to register a relative motion of the probes (3a, 3b) to each other in a plane, wherein at least one combination of a further transmitter (51'; 51") and a further receiver (52'; 52") is configured to register a relative motion perpendicular to this plane.

9. The measuring system (1) according to any one of claims 1 to 8, **characterized in that** the measuring means (5) comprise at least one capacitive sensor, eddy current sensor, inductive sensor, and/or LVDT, disposed on the one probe (3a) and sensitive to a position change of both probes (3a, 3b) to each other.

10. The measuring system (1) according to any one of claims 1 to 9, **characterized in that** both probes (3a, 3b) are mechanically connected via at least one converter (56) that is capable of converting a relative motion, and/or a force interaction, between both probes (3a, 3b) into an electrical signal.

**11.** The measuring system (1) according to any one of claims 1 to 10, **characterized in that** the probe (3a, 3b) are configured for radio transmission (7) of measurement data among each other, and/or at least one of the probes is configured for radio transmission (7) of measurement data to the evaluation unit (6).

**12.** The measuring system (1) according to any one of claims 1 to 11, **characterized in that** the measuring means (5) are at least partially disposed within an inner space (81) defined by both probes (3a, 3b) and the intermediate member (8).

**13.** The measuring system (1) according to any one of claims 1 to 12, **characterized in that** the probes (3a, 3b) are connected together and to a common mounting frame (9) by a plurality of spring elements (9a-9j), wherein the mounting frame (9) is opened towards the object (2).

**14.** The measuring system (1) according to any one of claims 1 to 13, **characterized in that** it comprises a first probe pair (3a, 3b) and a second probe pair (3c, 3d) and that the evaluation unit (6) is configured to distinguish deformations of the object (2) in a plane (21) from deformations of the object (2) out of this plane (21) by comparing the distances x, and/or distance changes dx, and/or angular positions $\alpha$, and/or angular changes d$\alpha$, registered by both probe pairs (3a, 3b; 3c, 3d).

## Revendications

**1.** Système de mesure (1) destiné à la détermination d'une déformation, d'une flexion ou d'une torsion d'un objet (2), comprenant au moins deux sondes (3a, 3b), comprenant en outre des moyens de fixation (4), aux moyens desquels les sondes (3a, 3b) peuvent être reliées à l'objet (2) d'une manière amovible non destructive, comprenant en outre des moyens de mesure (5) destinés à déterminer la distance x et/ou la variation de distance dx, et/ou une position angulaire $\alpha$, et/ou une variation angulaire d$\alpha$ de la position angulaire relative $\alpha$, entre les deux sondes (3a) et (3b) ainsi qu'une unité de traitement (6) destinée à mesurer la déformation, la flexion ou la torsion à partir de la distance x et/ou de la variation de distance dx, et/ou de la position angulaire $\alpha$, et/ou de la variation angulaire d$\alpha$, dans lequel les moyens de fixation (4) comprennent au moins une chambre évacuable (41), et/ou un vide formé au moyen de la jonction d'une sonde (3a, 3b) avec l'objet (2), dans lequel les deux sondes (3a, 3b) sont reliées l'une à l'autre de manière imperdable au moyen d'au moins une pièce intermédiaire (8) n'entravant pas un mouvement relatif entre les deux sondes (3a, 3b) causé par la déformation, la flexion ou la torsion de l'objet (2) et dans lequel

    - les moyens de mesure (5) comprennent au moins un émetteur (51) et au moins un récepteur (52) pour une onde électromagnétique (53) ou pour des ultrasons, dans lequel l'émetteur (51) et le récepteur (52) sont agencés sur l'une des sondes (3a), dans lequel au moins un réflecteur (54) pour l'onde électromagnétique (53) ou pour les ultrasons est agencé sur l'autre sonde (3b) et dans lequel un réflecteur supplémentaire (55) est agencé sur la sonde (3a) portant l'émetteur (51) et le récepteur (52), et/ou
    - les moyens de mesure (5) comprennent au moins un adaptateur d'ajustement (57), pouvant être amené en prise simultanément avec les deux sondes (3a, 3b) et établissant dans cet état une valeur de référence respectivement pour la distance x et la position angulaire $\alpha$ entre les deux sondes (3a, 3b).

**2.** Système de mesure (1) selon la revendication 1, **caractérisé en ce que** la chambre évacuable (41) peut être scellée par jonction d'une sonde (3a, 3b) avec l'objet (2).

**3.** Système de mesure (1) selon l'une des revendications 1 à 2, **caractérisé en ce que** les moyens de fixation (4) comprennent en outre au moins un canal (42), au moyen duquel la chambre (41) peut être évacuée après jonction d'une sonde (3a, 3b) avec l'objet (2).

**4.** Système de mesure (1) selon l'une des revendications 1 à 3, **caractérisé en ce qu'**au moins une surface portante (40) des moyens de fixation (4), faisant face à l'objet (2), comporte une rainure périphérique (46) dotée d'un joint (46a), lequel est comprimé par l'évacuation de la chambre évacuable (41).

**5.** Système de mesure (1) selon l'une des revendications 1 à 4, **caractérisé en ce que** les moyens de mesure (5) sont conçus pour la mesure d'une distance x entre 0,1 cm et 15 cm, de préférence entre 0,5 cm et 5 cm.

**6.** Système de mesure (1) selon l'une des revendications 1 à 5, **caractérisé en ce que** les moyens de mesure (5) sont conçus pour la mesure d'une variation angulaire da entre 0,001° et 0,1°.

**7.** Système de mesure (1) selon l'une des revendications 1 à 6, **caractérisé en ce que** le récepteur (52) est sensible à la position.

**8.** Système de mesure (1) selon la revendication 7, **caractérisé en ce que** le récepteur (52) sensible à la position est conçu de façon à saisir un mouvement relatif des sondes (3a, 3b) l'une par rapport à l'autre dans un plan, dans lequel au moins une combinaison d'un émetteur supplémentaire (51' ; 51") et d'un récepteur supplémentaire (52' ; 52") est prévue afin de saisir un mouvement relatif perpendiculaire à ce plan.

**9.** Système de mesure (1) selon l'une des revendications 1 à 8, **caractérisé en ce que** les moyens de mesure (5) comportent au moins un capteur capacitif agencé sur la sonde (3a) et/ou un capteur de courants de Foucault, un capteur inductif et/ou un LVDT, qui sont sensibles à une variation de position des deux sondes (3a) et (3b) l'une par rapport à l'autre.

**10.** Système de mesure (1) selon l'une des revendications 1 à 9, **caractérisé en ce que** les deux sondes (3a, 3b) sont reliées mécaniquement l'une à l'autre par au moins un convertisseur (56), lequel permet de convertir un mouvement relatif et/ou une action de force entre les deux sondes (3a, 3b) en un signal électrique.

**11.** Système de mesure (1) selon l'une des revendications 1 à 10, **caractérisé en ce que** les sondes (3a, 3b) sont conçues pour la radiotransmission (7) de données de mesures l'une à l'autre et/ou au moins une des sondes est conçue pour la radiotransmission (7) de données de mesures à l'unité de traitement (6).

**12.** Système de mesure (1) selon l'une des revendications 1 à 11, **caractérisé en ce que** les moyens de mesure (5) sont agencés au moins en partie à l'intérieur d'un espace intérieur (81) délimité par les deux sondes (3a, 3b) et la pièce intermédiaire (8).

**13.** Système de mesure (1) selon l'une des revendications 1 à 12, **caractérisé en ce que** les sondes (3a, 3b) sont reliées l'une à l'autre par une pluralité d'éléments de ressort (9a-9j) et reliées à un cadre de montage commun (9), dans lequel le cadre de montage commun (9) s'ouvre sur l'objet (2).

**14.** Système de mesure (1) selon l'une des revendications 1 à 13, **caractérisé en ce qu'**il comprend une première paire de sondes (3a, 3b) et une deuxième paire de sondes (3c, 3d) et **en ce que** l'unité de traitement (6) est conçue de façon à distinguer les déformations de l'objet (2) dans un plan (21) et les déformations de l'objet (2) hors du plan (21), par comparaison des distances x et/ou des variations de distance dx, et/ou des positions angulaires a, et/ou des variations angulaires da enregistrées avec les deux paires de sondes (3a, 3b ; 3c, 3d).

Fig. 1

Fig. 2a

Fig. 2b

Fig. 2c

Fig. 2d

Fig. 3

Fig. 4

Fig. 5

Fig. 6

Fig. 7a

Fig. 7b

Fig. 8a

Fig. 8b

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3043890 A1
- US 6817246 B1
- US 4480480 A
- DE 10210541 A1
- DE 2303787 A1
- US 2009178488 A1